# EUROPÄISCHE PATENTSCHRIFT

(11) **EP 2 892 728 B1**
(45) Veröffentlichungstag und Bekanntmachung des Hinweises auf die Patenterteilung: **08.05.2019**
(21) Anmeldenummer: 13756516.4
(22) Anmeldetag: 05.09.2013
(51) Int. Cl.: B42D 25/351, B42D 25/455, B42D 25/46, B42D 25/346, B42D 25/43, B42D 25/41, B32B 3/26, B32B 37/14, B32B 27/08, B32B 27/28, B32B 27/36, B32B 27/30, B32B 27/40, B32B 38/04, B32B 38/00, B32B 33/00

(54) **VERBUNDKÖRPER MIT INNENLIEGENDEM LINSENARRAY**
COMPOSITE BODY WITH INNER LENS ARRAY
ÉLÉMENT COMPOSITE MUNI D'UN RÉSEAU DE LENTILLES INTERNE

(30) Priorität: 05.09.2012 DE 102012215741
(43) Veröffentlichungstag der Anmeldung: 15.07.2015
(73) Patentinhaber: Bundesdruckerei GmbH, 10969 Berlin (DE)
(72) Erfinder: KULIKOVSKA, Olga, 14165 Berlin (DE); LEOPOLD, André, 10119 Berlin (DE); TRÖLENBERG, Stefan, 15749 Mittenwalde OT Ragow (DE); DRESSEL, Olaf, 14641 Wustermark (DE)
(74) Vertreter: Patentanwälte Bressel und Partner mbB
(86) Internationale Anmeldenummer: PCT/EP2013/068392
(87) Internationale Veröffentlichungsnummer: WO 2014/037454

(56) Entgegenhaltungen:
- EP-A2- 1 887 133
- EP-A2- 2 168 780
- DE-A1- 19 934 434
- DE-A1-102006 032 234

## Beschreibung

Die Erfindung betrifft ein Verfahren zur Herstellung eines Verbundkörpers für ein Sicherheits- und/oder Wertdokument, gemäß Anspruch 1, sowie einen solchen Verbundkörper mit einem innenliegenden Linsenarray, gemäß Anspruch 9.

Aus dem Stand der Technik sind Verbundkörper, welche als Halbzeug für eine Sicherheits- und/oder Wertdokumentherstellung oder selbst als Sicherheits- und/oder Wertdokumente benutzt werden, bekannt, welche Mikrolinsen aufweisen, die über eine Reliefstruktur in einer transparenten äußeren Materialschicht eines Verbundkörpers ausgebildet sind. Im Inneren eines solchen Verbundkörpers können unterschiedliche Informationen in Informationsrastern ausgebildet werden, die an ein Raster der Linsen angepasst sind. Abhängig von einer Betrachtungsrichtung sind durch das ausgebildete Linsenarray selektiv unter unterschiedlichen Betrachtungsrichtungen die unterschiedlichen Informationsraster und die darin gespeicherten Informationen sichtbar. Solche Strukturen und hierdurch ausgebildete Sicherheitsmerkmale werden als CLI- oder MLI-Merkmale oder Sicherheitselemente bezeichnet, wobei die Abkürzungen CLI und MLI ursprünglich für "Changeable Laser Image" und "Multiple Laser Image" stehen. Dies hat seine Ursache darin, dass die unterschiedlichen Bestandteile der Informationsraster bei einer Vielzahl der Ausführungsformen mittels einer Lasermarkierung durch das Linsenarray selbst in einer laserfähigen Materialschicht des Verbundkörpers ausgebildet werden. Beispielsweise kann eine Karbonisierung der Kunststoffschicht an jenen Stellen herbeigeführt werden, an denen die aus einer bestimmten Einstrahlrichtung relativ zur Oberfläche des Verbundkörpers bzw. einer Ebene des Linsenarrays auftreffende Laserstrahlung fokussiert wird. Die Punkte, an denen diese Fokussierung auftritt, sind jeweils von der Einstrahlrichtung relativ zu der Ebene des Linsenarrays abhängig.

Da Sicherheitsdokumente häufig einzelne Sicherheitsmerkmale umfassen, die nur schwer herzustellen sind, werden Sicherheitsdokumente häufig verfälscht. Dies bedeutet, dass an einem echten und autorisiert hergestellten Sicherheitsdokument Manipulationen vorgenommen werden, indem beispielsweise einzelne in dem Dokument gespeicherte Informationen verändert werden. Bei Sicherheitsdokumenten, die beispielsweise einer Person zugeordnet sind, wie Reisepässen, Personalweisen, Führerscheinen, Identifikationskarten oder Ähnlichen, werden hierbei beispielsweise eine Person identifizierende Daten ausgetauscht und/oder modifiziert. Um solche Manipulationen zu erschweren, wird versucht, Sicherheitsmerkmale im Inneren eines Verbundkörpers, welcher ein Halbzeug für die Sicherheits- und/oder Wertdokumentenherstellung ist oder selber ein Wert- und/oder Sicherheitsdokument darstellt, anzuordnen, um einen Zugriff auf diese Sicherheitsmerkmale zu erschweren.

Aus der DE 10 2008 053 582 B3 ist ein tragbarer Datenträger bekannt, in den ein Sicherheitsmerkmal durch Einbringen von Aussparungen, Befüllen der Aussparungen mit transluzentem Material und Aushärten des transluzenten Materials eingebracht wird, wobei das transluzente Material Bestandteile enthält, die durch UV- und/oder IR-Bestrahlung zur Lumineszenz anregbar sind. Hierdurch wird ein Sicherheitsmerkmal in einer Oberflächenschicht geschaffen, welches optisch wahrnehmbar ist. Ferner ist es beschrieben, den Datenträger mit einer so genannten Overlayfolie als äußeren Schutz zu überziehen.

Auch aus der DE 199 34 434 A1 ist ein Wert- und Sicherheitsdokument mit Perforierungen bekannt, bei denen Mikrokanäle als zusätzlicher Sicherheits- und Echtheitsnachweis angeordnet werden. Es sind Ausführungsformen beschrieben, bei denen Mikrokanäle unter unterschiedlichen Winkeln bezüglich einer Oberflächennormale der Schichten eingebracht werden, aus denen das Sicherheitsdokument gebildete wird. Hierdurch soll erreicht werden, dass aus unterschiedlichen Betrachtungsrichtungen jeweils nur die Kanäle der Perforierungen zu sehen sind, deren Kanalachsen im Wesentlichen mit einer Betrachtungsrichtung fluchten. In der DE 199 34 434 A1 ist ferner beschrieben, die erzeugten Kanäle zu verfüllen, um sie gegen Verschmutzungen zu schützen. Andere Ausführungsformen sehen vor, dass die Mikrokanäle mit fluoreszierenden oder lumineszierenden Stoffen befüllt und gegebenenfalls durch Schutzfolien abgedeckt werden, um hierdurch weitere optisch erfassbare Effekte zu erzeugen.

Aus der DE 10 2006 032 234 A1 sind ein Sicherheitsdokument mit einem Sicherheitsmerkmal sowie ein Verfahren zum Aufbringen eines Sicherheitsmerkmals auf ein Sicherheitsdokument bekannt, wobei das Sicherheitsdokument eine Trägerschicht mit mindestens einer Aussparung und eine zumindest die Aussparung abdeckende transparente Fensterfolie aufweist. Bei dem Verfahren wird mindestens ein individuelles Merkmal des Sicherheitsdokuments ermittelt und das Sicherheitsmerkmal auf der Basis des mindestens einen individuellen Merkmals des Sicherheitsdokuments erzeugt und das Sicherheitsmerkmal im Bereich der Aussparung mit der Fensterfolie verbunden.

Aus der EP 2 168 780 A2 ist ein Sicherheitsmerkmal zur Absicherung von Wertgegenständen bekannt. Dieses wird über Kern-Hülle-Teilchen, insbesondere zur Einbettung in einen bindemittelhaltigen Markierungsstoff für den Sicherheitsdruck, mit einem Kern, der einen Infrarotabsorber enthält, und mit einer den Kern umgebenden Hülle ausgebildet.

Aus der EP 1 887 133 A2 ist ein Sicherheitspapier mit internen Berührungserkennungselementen bekannt. Es besteht aus einem Blatt Papier, in das Ausdehnungsmittel eingebracht sind, die eine Form einer Figur oder einer Inschrift bilden und bei Anwendung von Druck und Hitze entweder während des Papierherstellungsprozesses oder nachfolgend eine Ausdehnung des Blatt Papiers bewirken, wodurch gekrümmte und kontinuierliche Prägungen auf der Oberfläche des Dokuments entstehen.

Aus der DE 10 2007 037 982 A1 ist ein Sicherheitsdokument mit einer wasserzeichenartigen Struktur bekannt. Beschrieben ist ein Verbundsicherheitsdokument mit einer wasserzeichenartigen Struktur und ein Verfahren zur Herstellung eines solchen Verbundsicherheitsdokuments, bei dem mehrere Schichten bereitgestellt werden, die mehreren Schichten übereinander angeordnet werden und die mehreren übereinander angeordneten Schichten in einem Hochdruck-Hochtemperatur-Laminierverfahren zu einem Dokumentkörper laminiert werden, wobei mindestens in eine der mehreren Schichten mindestens eine Aussparung eingebracht wird und die mehreren Schichten so angeordnet werden, dass die mindestens eine Aussparung zu einer Ober- und einer Unterseite der übereinander angeordneten Schichten abgeschlossen ist und das Volumen der Aussparung leer ist und die mindestens eine leere Aussparung evakuiert wird und das Laminieren so ausgeführt wird, dass sich eine hohlreliefartige Struktur in dem Dokumentkörper ausbildet. Die dort beschriebenen Gegenstände weisen eine Modulation einer Materialstärke des Verbundkörpers im fertigen Zustand auf.

Der Erfindung liegt somit die technische Aufgabe zugrunde, ein Verfahren zur Herstellung eines Verbundkörpers für ein Wert- und/oder Sicherheitsdokument und einen solchen Verbundkörper zu schaffen, der ein Linsenarray für ein Ausbilden eines Sicherheitsmerkmals oder als Sicherheitsmerkmal aufweist, welches besser gegen Beschädigungen und/oder Manipulationen geschützt ist, als die aus dem Stand der Technik bekannten, an einer Oberfläche eines Verbundkörpers ausgebildeten Linsenarray.

### Grundidee der Erfindung

Der Erfindung liegt die Idee zugrunde, Linsenelemente in Form von Gaseinschlüssen in transparentem Kunststoffmaterial auszubilden, wobei die Gaseinschlüsse an einer einer Oberfläche eines flächig ausgedehnten Verbundkörpers zugewandten Grenzfläche oder an einer von der Oberseite des Verbundkörpers abgewandten Grenzfläche des Gaseinschlusses eine Wölbung aufweisen. Da ein Gas und transparentes Kunststoffmaterial unterschiedliche Brechungsindizes aufweisen, findet an einer gewölbten Eintritts- und/oder Austrittsfläche eines Gaseinschlusses eine Lichtbeugung statt, wie sie ebenfalls an Linsenoberflächen auftritt, die ebenfalls eine Wölbung aufweisen. Insbesondere wird ein Verfahren zur Herstellung eines Verbundkörpers eines Sicherheits- und/oder Wertdokuments vorgeschlagen, welches die Schritte umfasst: Bereitstellen einer transparenten, flächig ausgedehnten Substratschicht aus einem thermoplastischen Kunststoffmaterial;
Einbringen einer Vielzahl von Ausnehmungen in die transparente, flächig ausgedehnte Substratschicht;
Zusammentragen der mit den Ausnehmungen versehenen Substratschicht mit mindestens einer weiteren transparenten, thermoplastischen Substratschicht zu einem Substratschichtenstapel, sodass die durch die Ausnehmungen gebildeten Volumina mit einem Gas gefüllt sind und umlaufend von thermoplastischem Substratschichtmaterial umgeben sind;
Laminieren der Substratschichten zu dem Verbundkörper in einem Hochtemperatur-Hochdruck-Verfahren, sodass sich ein flächig ausgedehnter Verbundkörper mit einer Oberseite und einer Unterseite ergibt und die gasgefüllten Volumina als Einschlüsse in dem Verbundkörper verbleiben, welche an einer der Oberseite des gebildeten Verbundkörpers zugewandten und/ oder an einer der Oberseite des gebildeten Verbundkörpers abgewandten Begrenzungsfläche eine Wölbung aufweisen.
Ferner wird ein Verbundkörper für ein Wert- oder Sicherheitsdokument vorgeschlagen, der eine Oberseite und eine gegenüberliegende Unterseite aufweist und welcher entlang der Oberseite flächig ausgedehnt ist und im Inneren in einer transparenten Materialschicht eine Vielzahl von in einer Ebene, welche parallel zu der flächigen Ausdehnung der Oberseite des Verbundkörpers orientiert ist, angeordnete Gaseinschlüsse aufweist, welche an einer der Oberseite zugewandten und/oder an einer der Oberseite abgewandten Begrenzungsfläche eine Wölbung aufweisen.

Der Vorteil der Erfindung liegt darin, dass auf einfache Weise eine Herstellung eines Linsenrasters in den Fertigungsprozess eines Verbundkörpers für ein Wert- und/oder Sicherheitsdokument integriert werden kann, und zugleich das erzeugte Linsenarray sehr gut gegen Manipulationen geschützt ist, da dieses im Inneren des Verbundkörpers ausgebildet ist. Während an einer Oberfläche eines Verbundkörpers ausgebildete Linsenarrays durch mechanisches Abtragen von Material oder Zufügen von Material beseitigt, hinzugefügt und/oder manipuliert werden können, ist ein Einbringen von im Inneren eines Verbundkörpers ausgebildeten Linsenelemente nahezu unmöglich. Darüber hinaus schützen solche im Inneren ausgebildeten in Form von Gaseinschlüssen gebildeten Linsenelemente sehr gut vor einer Manipulation durch Delamination einzelner Materialschichten eines Verbundkörpers und anschließendes erneutes Zusammenfügen. Ein exaktes passergenaues Aufeinanderfügen der delaminierten Materialschichten und erneutes Zusammenfügen, beispielsweise über eine thermische Lamination zerstört oder verändert die Gaseinschlüsse in der Regel so, dass sich deren Brechungseigenschaften, beispielsweise deren Fokuslänge, verändert. Auch eine Verwendung eines Haftmittels zum Zusammenfügen von zuvor delaminierten Materialschichten ist in der Regel nicht möglich, ohne dass entweder Haftmittelbestandteile in die neu gebildeten Einschlüsse eindringen oder sich deren Volumina und Abmessungen verändern und hierüber ebenfalls die optischen Eigenschaften der im Inneren ausgebildeten Linsenelemente verändern.

Insgesamt wird somit die Fälschungssicherheit des Verbundkörpers deutlich gesteigert.

Ein weiterer Vorteil der Erfindung besteht darin, dass der Verbundkörper glatte und ebene Oberflächen aufweist und somit Verschmutzungen, wie sie häufig bei an der Oberfläche ausgebildeten Reliefstrukturen auftreten, nicht mehr vorhanden sind. Ferner wird an der Oberfläche des Verbundkörpers keine Fläche beansprucht, so dass beispielsweise andere Sicherheitselemente überlagert ausgebildet werden können. Beispielsweise kann ein Hologrammfilm, welcher zumindest für einzelne Wellenlängen transparent ist, auf einer Oberfläche des Verbundkörpers in jenem Bereich angebracht werden, in dem im Inneren die als Linsenelemente wirkenden Gaseinschlüsse ausgebildet sind. Insgesamt werden somit die Gestaltungsmöglichkeiten und insbesondere die Kombinationsmöglichkeiten von unterschiedlichen Sicherheitsmerkmalen und Sicherheitselementen in einem Verbundkörper gesteigert. Darüber hinaus entfallen die durchaus erheblichen Kosten, welche für die Fertigung von Prägeblechen anfallen, die genutzt werden, um Linsenstrukturen in eine Oberfläche eines Verbundkörpers bei einem Laminationsvorgang nach dem Stand der Technik einzuprägen.

### Definitionen

Als monolithisch wird ein Verbundkörper, welcher aus unterschiedlichen Substratschichten hergestellt ist, bzw. ein Verbundkörper, der unterschiedliche Materialschichten aufweist, angesehen, bei dem die sich ergebende Polymerstruktur zwischen den ursprünglichen Substratschichten bzw. den Materialschichten im fertigen Verbundkörper keinen Phasenübergang hinsichtlich der Polymerstruktur aufweist. Dies bedeutet, dass eine Umordnung der Polymerstruktur über die ursprüngliche Substratschichtgrenze hinweg so erfolgt, dass diese Schichtgrenze anschließend aufgrund der Polymerstruktur nicht mehr zu erkennen ist. Es wird an dieser Stelle angemerkt, dass in dem fertigen Verbundkörper dennoch unterschiedliche Materialschichten identifizierbar sein können, da beispielsweise eine opake Materialschicht, welche aus einer ursprünglich opaken Substratschicht hervorgegangen ist, Zusatzstoffe, welche in die Polymermatrix eingebunden sind, umfasst, die die optischen Eigenschaften in dieser Materialschicht gegenüber einer transparenten Materialschicht verändern. Dennoch ist der durch das Polymermaterial gebildete Dokumentkörper hinsichtlich seiner mechanischen Stabilität, insbesondere gegenüber einer Delamination bzw. Trennbarkeit der einzelnen Materialschichten, als ein einheitlicher, im Wesentlichen homogener Körper anzusehen, der aus einer transparenten und einer opaken Substratschicht zu einem monolithischen Verbundkörper gefügt ist.

Als eben wird eine Oberfläche angesehen, welche flach ist und durch eine nicht gekrümmte Fläche in einem kartesischen Raum approximiert werden kann. Eine Oberfläche wird als eben im Bereich darunterliegender Mikroperforation angesehen, wenn Abweichungen gegenüber einer flachen, nicht gekrümmten kartesischen Ebene in einem Flächengebiet, unterhalb dessen in einer Materialschicht Mikroperforationen angeordnet sind, in derselben Größenordnung liegen, wie die bei einem gleichartig hergestellten Verbundkörper auftretenden Abweichungen, der keine Mikroperforationen in einer darunter liegenden Materialschicht aufweist.

Als Sicherheitsmerkmal wird jedes Merkmal bezeichnet, welches eine Nachahmung, Verfälschung, Manipulation oder Ähnliches eines Gegenstands unmöglich macht oder erschwert.

Als Sicherheitsdokument wird jedes Dokument bezeichnet, welches mindestens ein Sicherheitsmerkmal, in der Regel eine Vielzahl unterschiedlicher Sicherheitsmerkmale, umfasst. Sicherheitsdokumente umfassen beispielsweise ID-Dokumente, Reisepässe, Personalausweise, Identifikationskarten, Führerscheine, Fahrzeugscheine, Fahrzeugbriefe, Zugangsberechtigungskarten, Firmenausweise, Zutrittskarten, Bankkarten, Kreditkarten, Visa, aber auch gegen eine Fälschung gesicherte Etiketten, Eintrittskarten, Banknoten, Postwertzeichen, Wertpapiere oder Ähnliches. Solche Sicherheitsdokumente, die einen Wert verkörpern, wie beispielsweise Postwertzeichen, Wertpapiere oder Banknoten, werden auch als Wertdokumente bezeichnet. Eine Abgrenzung zwischen Wert- und Sicherheitsdokumenten ist nicht in jedem Fall eindeutig möglich und im Hinblick auf den Erfindungsgegenstand auch nicht wesentlich. Im Sinne der hier beschriebenen Gegenstände werden Wertdokumente auch immer als Sicherheitsdokumente aufgefasst.

Als Substratschicht wird hier jeweils eine selbsttragende flache Entität verstanden. Flach bedeutet in diesem Zusammenhang, dass eine Materialstärke der Substratschicht senkrecht zu einer flächigen Ausdehnung einer Ober- und einer Unterseite, welche im Wesentlichen parallel zueinander orientiert sind, wesentlich kleiner als die Kantenlängen dieser Ober- und Unterseite ist. Eine Substratschicht kann insbesondere in Form einer Folie bereitgestellt werden, die als Bogen oder Endlosmaterial von einer Rolle vorliegen kann. Im Regelfall weist eine Substratschicht senkrecht zu den Hauptflächen an allen Orten parallel zur Oberflächennormalen gemessen eine einheitliche Materialstärke auf.

Eine Volumenschicht ist eine eine endliche Schichtstärke aufweisende Schicht eines Gegenstandes, insbesondere eines Verbundkörpers.

Als Materialschicht wird eine Volumenschicht in einem Verbundkörper angesehen, die eine im Wesentlichen homogene Beschaffenheit hinsichtlich ihres thermoplastischen Grundmaterials aufweist.

Durch Farbzusammensetzungen erzeugte Drucklagen werden nicht als Materialschichten angesehen.

Unter thermoplastischen Polymermaterialien werden solche Materialien verstanden, die in einem bestimmten Temperaturbereich plastisch verformbar sind. Beispiele für thermoplastische Polymermaterialien sind Polyethylenterephthalate (PET), Polyethylennaphthalate (PEN), Polyvinylchlorid (PVC), Acrylnitril-Butadien-Styrol (ABS), Polyamide (PA), Polyazetat (PLA), Polymethylmethacrylat (PMMA), Polycarbonat (PC), Polyethylen (PE), Polypropylen (PP), Polystyrol (PS), Polyetheretherketon (PEEK), um die Wichtigsten aufzuzählen. Ebenso können thermoplastische Elastomere (TPE), insbesondere thermoplastisches Polyurethan (TPO), als thermoplastische Werkstoffe zur Herstellung eines Verbundkörpers genutzt werden.

Ein thermoplastisches Grundmaterial umfasst ein thermoplastisches Polymer, welches gegebenenfalls Zusatzstoffe (beispielsweise Nanopartikel und/oder Mikropartikel und/oder Farbmittel) umfasst, die für eine Färbung etc. sorgen und die homogen in dem Polymermaterial verfüllt sind.

Ausnehmungen sind Hohlvolumina in einer Substratschicht. Durchbrechungen sind Hohlvolumina, die durch ein Substrat eine Verbindung zwischen zwei gegenüberliegenden Oberflächen bilden. Sacklöcher oder Ähnliches sind Ausnehmungen, die die Substratschicht nicht vollständig durchbrechen.

Als Mikroperforationen werden hier Durchgangsöffnungen durch eine Substratschicht bzw. Öffnungen in einer Materialschicht angesehen, welche kanalartig die Substratschicht bzw. Materialschicht durchdringen und deren maximaler Kanaldurchmesser in einer Richtung quer zur Durchdringungsrichtung der Substratschicht im Mikrometerbereich liegt, vorzugsweise kleiner 200 µm, bevorzugt kleiner 150 µm ist, am bevorzugtesten im Bereich zwischen 5 µm und 100 µm liegt.

Auch ein Schlitz, dessen Ausdehnung in Schlitzlängsrichtung im Millimeter- oder Zentimeterbereich liegt, wird als Mikroperforation angesehen, wenn die maximale Ausdehnung quer zur Schlitzlängsrichtung im Mikrometerbereich liegt.

Als konvex wird eine Grenzfläche eines Körpers oder eines Volumens angesehen, wenn diese sich nach außen wölbt. Dieses bedeutet, dass ein Krümmungsradius einer die Grenzfläche approximierenden Fläche positiv ist, d.h. der Mittelpunkt, von dem aus der Krümmungsradius der approximierenden Fläche abgetragen ist, auf der dem Körper oder Volumen zugewandten Seite der Grenzfläche liegt.

Konkav ist hingegen eine Grenzfläche eines Körpers oder eines Volumens, die in den Körper oder das Volumen hinein gewölbt ist. Ein Mittelpunkt, von dem ein Krümmungsradius einer die Grenzfläche approximierenden Fläche abgetragen ist, liegt außerhalb des Körpers oder Volumens, d.h. auf der von dem Körper oder Volumen abgewandten Seite der Grenzfläche.

Als bikonvex wird ein Körper oder Volumen bezeichnet, bei dem diametral gegenüberliegende Grenzflächen konvex sind. Entsprechend ist ein Körper oder ein Volumen plankonvex, wenn eine der diametral gegenüberliegenden Flächen plan und die andere konvex ist.

Die Begriffe transparent oder transluzent und opak beziehen sich hier jeweils auf den Zustand, den ein Material nach dem Laminieren mit dem Hochtemperatur-Hochdruck-Laminationsverfahren annimmt. So sind beispielsweise Folien aus Polycarbonat, welche im fertigen Verbundkörper transparente Materialschichten bilden, häufig vor dem Laminieren aufgrund einer gewissen Oberflächenrauheit transluzent. Eine opake Substratschicht, welche beispielsweise ebenfalls auf Polycarbonatbasis hergestellt ist, kann beispielsweise über Zusätze von Titandioxid, so genanntem Titanweiß, opak ausgebildet sein.

Als transparent wird ein Gegenstand oder ein Raumgebiet bezeichnet, welches Licht, d.h. elektromagnetische Strahlung, einer Wellenlänge oder eines Wellenlängenbereichs in Form gerichteter Strahlung passieren lässt. Eine gerichtete Strahlung weist eine Intensitätsverteilung auf, die nur in einem zusammenhängenden begrenzten Raumwinkelbereich eine hohe Intensität aufweist. Unter den übrigen Raumwinkeln ist die Intensität wesentlich, in der Regel um mehrere Größenordnungen, schwächer, vorzugsweise nahe null. Tritt eine solche gerichtete Strahlung durch ein transparentes Material, so bleibt die Eigenschaft erhalten, dass die Intensität in einem begrenzten Raumwinkelbereich konzentriert ist. Der Raumwinkelbereich kann sich zwar vergrößern, eine nennenswerte diffuse Streuung tritt jedoch nicht auf. Eine Abschwächung hinsichtlich einer Intensität der durch den transparenten Bereich bzw. das transparente Raumgebiet tretenden Strahlung kann jedoch auftreten. Durch ein transparentes Material hindurch ist eine Abbildung gemäß der geometrischen Optik möglich.

Als transluzent wird hingegen ein Material bezeichnet, bei dem die beschriebene Eigenschaft der Erhaltung der Richtungscharakteristik nicht mehr vorliegt. Hauptsächlich durch diffuse Streuung wird aus einer ursprünglich gerichteten Strahlung, eine Strahlung, deren Intensitätsverteilung in einem großen Raumwinkelbereich eine deutlich wahrnehmbare Intensität aufweist. Eine Intensitätsüberhöhung in dem oder um den Winkelbereich, der mit der ursprünglichen Ausbreitungsrichtung der gerichteten Strahlung assoziiert werden kann, ist zwar möglich, beträgt aber nicht mehr mehrere Größenordnungen.

Als opak wird die Eigenschaft bezeichnet, welche einen Durchtritt von Licht, d.h. elektromagnetischer Strahlung, zumindest für eine Wellenlänge oder einen oder mehrere Wellenlängenbereiche unterbindet oder zumindest die Intensität um mehrere Größenordnungen abschwächt. Für die Angabe, ob ein Gegenstand oder ein Raumgebiet transparent oder opak ist, ist es von Bedeutung, dass die Wellenlänge oder der Wellenlängenbereich angegeben wird, für den diese Eigenschaften untersucht werden oder gelten. Es gibt eine Vielzahl von Materialien, welche beispielsweise im sichtbaren Wellenlängenbereich transparent, jedoch im ultravioletten Wellenlängenbereich opak sind.

Angaben wie opak, transluzent und transparent beziehen sich jeweils auf die Eigenschaft der Materialschicht nach dem Laminieren, beziehungsweise bei einer Substratschicht auf die Eigenschaft der nach dem Laminieren hieraus gebildeten Materialschicht.

Ein innenliegender Volumeneinschluss ist ein zusammenhängender abgeschlossener Volumenbereich in einem Verbundkörper, der keine Grenzfläche aufweist, die mit einer Außenfläche des Verbundkörpers zusammenfällt oder zusammentrifft. Ein Volumeneinschluss ist somit vollständig vom thermoplastischen Polymermaterial umschlossen, auf dessen Basis die Substratschichten hergestellt sind, aus denen der Verbundkörper gebildet ist.

### Bevorzugte Ausführungsformen

Vorzugsweise weisen die Gaseinschlüsse eine plankonvexe oder bikonvexe Gestalt bezüglich den Begrenzungsflächen auf, die der Oberseite zu- und abgewandt sind. Gaseinschlüsse mit bikonvexer oder plankonvexer Gestalt bieten den Vorteil, dass diese sehr viel schwerer nachzubilden sind als konvexkonkave Gaseinschlüsse, bei denen die konkave Begrenzungsfläche durch in die Ausnehmung während des Laminationsvorgangs eindringendes Material der an die Ausnehmung angrenzenden und diese abschließenden Substratschicht gebildet ist. Auch bei einer Verfälschung, welche eine Delamination und anschließendes erneutes Laminieren umfasst, lassen sich plankonvexe, und insbesondere bikonvexe, Gaseinschlüsse besonders schwer erneut korrekt ausbilden.

Besonders bevorzugt werden die Ausnehmungen in einem Raster ausgebildet. Vorzugsweise sind somit die Einschlüsse in einem Verbundkörper in einem regelmäßigen Raster angeordnet. Besonders bevorzugt handelt es sich um ein gleichmäßiges Raster. Hierbei kommen unterschiedliche Raster in Frage, beispielsweise aus quadratischen Grundzellen bestehende Raster oder auch hexagonale Raster. Über eine Wahl der Rastergeometrie können die Abbildungseigenschaften des Linsenarrays verändert und variiert werden.

Als besonders vorteilhaft für ein Ausbilden der Wölbungen der Einschlüsse hat es sich erwiesen, die Ausnehmungen so auszugestalten, dass sie quer zu einer Eindringrichtung oder Durchdringungsrichtung in die Substratschicht, welche im Wesentlichen senkrecht zur Oberfläche der Substratschicht orientiert ist, eine variierende Ausdehnung aufweist. Besonders bevorzugt verjüngt sich die Ausdehnung quer zur Eindring- oder Durchdringungsrichtung der Substratschicht. Ebenso ist es insbesondere bei Durchdringungen der Substratschicht möglich, die Ausnehmung so auszugestalten, dass sich deren Ausdehnung quer zur Durchdringungsrichtung aufweitet.

Die Ausnehmungen selbst können mittels unterschiedlichster Verfahren in die Substratschicht eingebracht werden. Als mögliche Verfahren kommen hier insbesondere Bohren, Stechen, Stanzen oder andere materialabtragende Verfahren in Frage. Besonders bevorzugt werden laserbasierte Verfahren, beispielsweise eine Laserablation. Über eine Variation der deponierten Energiedosis und/oder einer Variation der Fokussierung und/oder anderer Strahlparameter, beispielsweise einer Strahlprofilform, können auf einfache Weise unterschiedlich Ausnehmungen ausgebildet werden. Über eine Variation des Rasters und/oder der Durchmesser können die Größen und Formen der sich ausbildenden Gaseinschlüsse beeinflusst und variiert werden und hierüber beispielsweise eine Brennweite der sich bildenden Linsenelemente, welche durch die Gaseinschlüsse gebildet werden, gezielt eingestellt werden.

Bei einer Ausführungsform ist vorgesehen, dass die Ausnehmungen als Mikroperforationen ausgebildet sind. Besonders bevorzugt erstrecken sich die Mikroperforationen von der einen Seite zu einer gegenüberliegenden Seite der mindestens einen transparenten Substratschicht und verjüngen sich oder weiten sich hinsichtlich ihres Durchmessers von der einen Seite zu der gegenüberliegenden Seite auf.

Bikonvexe Gaseinschlüsse lassen sich besonders einfach ausbilden, wenn Ausnehmungen in zwei Substratschichten eingebracht werden und die Substratschichten so vor dem Laminieren zusammengetragen werden, dass die Ausnehmungen aus zwei Substratschichten ein gemeinsames Volumen bilden. So werden beispielsweise in eine Unterseite einer Substratschicht Ausnehmungen in einem Raster eingebracht, die vorzugsweise als sich verjüngende Löcher, noch bevorzugter als sich verjüngende Sacklöcher, ausgebildet werden. In der darunter angrenzenden Substratschicht werden in die Oberseite im gleichen Raster Löcher eingebracht, vorzugsweise sich verjüngende Löcher, besonders bevorzugt sich verjüngende Sacklöcher. Nach dem Zusammentragen bilden jeweils eine Ausnehmung in der Unterseite der oberen Substratschicht und eine Ausnehmung in der Oberseite der unteren Substratschicht ein gemeinsames Volumen, das im fertigen Dokument einen Gaseinschluss bildet.

Besonders bevorzugt werden die Mikroperforationen mit einem elliptisch oder kreisförmigen Querschnitt quer zur Durchdringungsrichtung der flächig ausgedehnten, transparenten Substratschicht ausgebildet und weiten sich entlang der Durchdringungsrichtung konisch auf oder verjüngen sich konisch. Ein elliptisch oder kreisförmiger Querschnitt der Mikroperforationen bietet den Vorteil, dass die Gaseinschlüsse bei solchen Ausführungsformen bevorzugt ellipsoide Grenzflächen ausbilden und so auch aus gegenüber der Oberseite des Verbundkörpers geneigte Betrachtungsrichtungen, die zu Strahlengängen führen, die "durch eine Seitenwand" der ursprünglichen Ausnehmung verlaufen, eine lichtbrechende Wirkung zeigen.

Sind die Ausnehmungen nur als Sacklöcher in der transparenten Schicht ausgebildet, so lässt sich ein Verbundkörper bilden, in dem über diese mit den Ausnehmungen versehene Substratschicht eine weitere transparente Substratschicht im Substratschichtenstapel angeordnet wird, welche die Ausnehmungen verschließt. Sind hingegen die Ausnehmungen als Durchdringungen der Substratschicht, beispielsweise als Mikroperforationen ausgebildet, so wird die mit den Ausnehmungen versehene Substratschicht zwischen zwei transparente Substratschichten geschichtet, die dann gemeinsam nach dem Laminieren die Grenzfläche der gebildeten Einschlüsse bilden. Bei einer Ausführungsform ist somit die mindestens eine mit den Ausnehmungen versehene transparente Substratschicht im Substratschichtenstapel zwischen zwei unmittelbar angrenzenden transparenten Substratschichten angeordnet, die aus einem Kunststoffmaterial bestehen, welches auf Basis desselben Polymermaterials hergestellt ist, wie der Kunststoff der mit den Ausnehmungen versehenen transparenten Substratschicht. In einem solchen Fall bildet sich ein monolithischer Verbundkörper aus, bei dem in dem fertigen Verbundkörper keine Phasenübergänge zwischen den Materialschichten erkennbar sind, die mit den Substratschichten korrespondieren, aus denen die entsprechenden Substratschichten ursprünglich gebildet sind.

Mit im Inneren des Verbundkörpers ausgebildeten Linsenelementen in Form von Gaseinschlüssen lassen sich Sicherheitsmerkmale und Sicherheitselemente realisieren, welche in Aufsicht oder in Durchsicht verifizierbar sind. Bei einer Ausführungsform wird beispielsweise die Linsenwirkung der Gaseinschlüsse im Linsenarray in einem Durchsichtfenster als Sicherheitsmerkmal verwendet. Um Sicherheitsmerkmale auszubilden, die in Durchsicht verifizierbar sind, wird der Verbundkörper so ausgebildet, dass dieser zumindest unterhalb eines flächigen Bereichs, unter dem zumindest ein Teil der Gaseinschlüsse gebildet ist, zwischen der Oberseite und der Unterseite des Verbundkörpers aus im Volumen transparenten Material ausgebildet wird oder ist. Ein solcher Bereich wird auch als Durchsichtfenster bezeichnet. Es versteht sich für den Fachmann, dass auch in einem solchen Durchsichtbereich oder Durchsichtfenster einzelne nicht transparente Markierungen, beispielsweise Druckelemente angebracht sein können, welche jedoch nicht geschlossen flächig opak sind. Beispielsweise kann auf einer von der Oberseite abgewandten Seite der Gaseinschlüsse im Inneren des Dokuments oder an der Unterseite ein Raster ausgebildet sein. Dieses kann beispielsweise gedruckt über ein über lokal im Raster ausgeführte Demetallisierungen, im Raster eingebrachte Lasermarkierungen oder Ähnliches ausgebildet sein. Betrachtet man den Verbundkörper im Durchsichtfensterbereich von der Unterseite, so erkennt man das Raster, so wie es in dem Dokumentkörper ausgebildet ist. Betrachtet man den Verbundkörper hingegen durch die Oberseite durch das durch die Gaseinschlüsse gebildete Linsenarray hindurch, so sieht man ein optisch modifiziertes, beispielsweise vergrößertes Linsenraster. Wird ein Raster zwischen die Oberseite und die Gaseinschlüsse eingebracht, ändert sich dieses und man sieht das Raster durch die Oberseite "unverändert" und, von der Unterseite aus gesehen, wird das Raster durch das Linsenarray modifiziert.

Bei anderen Ausführungsformen werden mehrere Informationsraster in den Verbundkörper integriert. Erneut werden diese vorzugsweise auf der von der Oberseite abgewandten Seite der Gaseinschlüsse integriert. Dies kann beispielsweise durch ein Aufdrucken der Raster auf eine Substratschicht erfolgen, die im Substratschichtenstapel auf der von der Oberseite des Substratschichtenstapels abgewandten Seite der mit den Ausnehmungen versehenen Substratschicht angeordnet ist. Alternativ kann dieses über ein Einbringen einer Metallschicht, welche anschließend partiell demetallisiert wird oder auch über ein Einbringen von Lasermarkierungen erfolgen. Vorzugsweise weisen die unterschiedlichen Informationsraster unterschiedliche grafische Informationen auf. Hierbei ist an unterschiedlichen Rasterstellen bei einer grafischen "Schwarz-Weiß-Darstellung" entweder eine schwarze Markierung vorhanden oder nicht. Bei einer Graustufen-Darstellung weisen die unterschiedlichen Rasterstellen unterschiedliche Graustufen zwischen 0 % (transparent) bis 100 % (schwarz) auf. Ist die grafische Information farbig, weist jede Rasterstelle einen bestimmten Farbeindruck oder Farbton auf. Die unterschiedlichen Informationsraster sind verschachtelt aufgebracht, so dass abhängig von der Betrachtungsrichtung durch die Oberseite des fertiggestellten Verbundkörpers jeweils selektiv nur eines der Informationsraster sichtbar ist. Hierdurch lassen sich Kippbilder oder auch bewegte Darstellungen realisieren.

Da die Gaseinschlüsse bei zylindrisch ausgebildeten Perforationen zu sphärenartigen, vorzugsweise somit zu konvexen, Linsen führen, können solche unterschiedlichen betrachtungsabhängigen Informationswahrnehmungen für Verkippungen um unterschiedliche, beispielsweise senkrecht aufeinander stehende und in der Ebene der flächigen Ausdehnung der Oberfläche des Verbundkörpers liegende Kippachsen realisiert werden.

Besonders bevorzugt weisen die Einschlüsse bzw. Ausnehmungen entlang einer Raumrichtung in der Ebene der flächigen Ausdehnung der mindestens einen transparenten Substratschicht oder des Verbundkörpers Ausdehnungen von kleiner 500 µm, bevorzugt kleiner als 300 µm und am bevorzugtesten zwischen 5 µm und 100 µm auf.

Zum Ausbilden eines Lentikularlinsenarrays können in die Substratschicht schlitzartige Ausnehmungen eingebracht werden, welche beispielsweise quer zur Längsrichtung des Schlitzes ebenfalls eine maximale Ausdehnung von weniger als 200 µm aufweisen. Entlang der Eindringrichtung verringert sich die Querschnittsfläche vorzugsweise ebenfalls. Dies bedeutet quer zur Schlitzrichtung entlang der Eindringtiefe verjüngt sich die Ausnehmung oder weiten sich die Ausnehmungen auf.

Betrachtungswinkelabhängige Informationswahrnehmungen lassen sich sowohl in Durchsicht als auch in Aufsicht realisieren. Bei Merkmalen, die in Aufsicht verifizierbar sind, kann auf einer von der Oberseite des Verbundkörpers bzw. des Substratschichtenstapels abgewandten Seite der Ausnehmungen bzw. Gaseinschlüsse eine Material- bzw. eine Substratschicht angeordnet werden bzw. sein, die opak ausgebildet ist oder mittels einer opaken Farbe überdruckt ist. Ebenso sind Ausführungsformen möglich, bei denen eine der Substratschichten oder mehrere Substratschichten transluzent ausgebildet sind. Zwischen der Oberseite und den Gaseinschlüssen ist der Verbundkörper jedoch jeweils mit im Volumen transparent ausgebildetem Kunststoffmaterial gebildet.

Nachfolgend wird die Erfindung unter Bezugnahme auf Ausführungsformen näher erläutert. Hierbei zeigen:
- Fig. 1: eine schematische Darstellung der zu einem Substratschichtenstapel zusammenzufügenden Substratschichten im Querschnitt zur Erläuterung der Herstellung eines Verbundkörpers;
- Fig. 2: eine schematische Schnittansicht eines Verbundkörpers;
- Fig. 3: eine schematische Schnittansicht eines weiteren Verbundkörpers mit einem Durchsichtfenster;
- Fig. 4: eine schematische Schnittansicht eines Verbundkörpers mit einer opaken Unterseite;
- Fig. 5: eine schematische Schnittansicht eines Verbundkörpers mit einem Informationsraster;
- Fig. 6: eine schematische Darstellung von zwei Substratschichten in Draufsicht, welche zur Herstellung eines Verbundkörpers ähnlich zu dem nach Fig. 5 verwendet werden;
- Fig. 7: eine schematische Darstellung eines Verbundkörpers mit einer laserfähigen Materialschicht;
- Fig. 8: eine schematische Darstellung eines Verfahrens zur Ausbildung eines CLI-Merkmals;
- Fig. 9: eine schematische Draufsicht auf eine mit Ausnehmungen versehene Substratschicht, wobei die Ausnehmungen zeilenartig zum Erzeugen eines Zylinder-Linsenrasters ausgebildet sind;
- Fig. 10: eine schematische Draufsicht auf eine Substratschicht, in der Mikroperforierungen als Ausnehmungen in einem quadratischen Raster ausgebildet sind;
- Fig. 11: eine schematische Draufsicht auf eine Substratschicht, bei der die Ausnehmungen in einem Raster mit einer hexagonalen Grundstruktur ausgebildet sind;
- Fig. 12: eine schematische Schnittansicht einer Substratschicht mit Mikroperforierungen, welche sich konisch verjüngen;
- Fig. 13: eine Mikroskopaufnahme einer Draufsicht einer perforierten Substratschicht;
- Fig. 14: eine Mikroskopaufnahme der Draufsicht auf einen Verbundkörper;
- Fig. 15: ein vergrößerter Ausschnitt der Mikroskopaufnahme der Draufschicht auf einen Verbundkörper nach Fig. 14; und
- Fig. 16: eine Mikroskopaufnahme eines Querschnitts durch einen Verbundkörper.

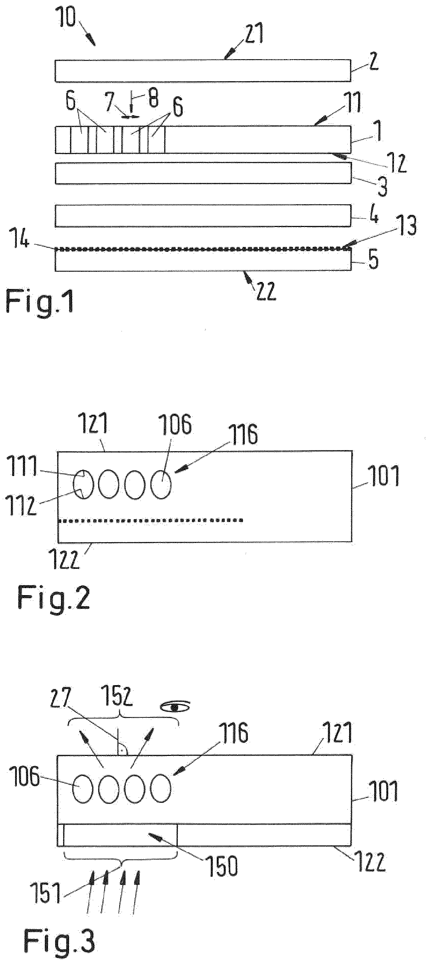

In Fig. 1 sind schematisch die zu einem Substratschichtenstapel 10 zusammenzuführenden Substratschichten 1 bis 5 jeweils im Querschnitt dargestellt. Der Substratschichtenstapel 10 ist quasi als Explosionsdarstellung gezeigt. Zur Herstellung eines Verbundkörpers wird eine transparente Substratschicht 1 mit Ausnehmungen 6, hier beispielsweise in Form von Mikroperforierungen, die einem regelmäßigen Raster angeordnet sind, versehen. Die als Mikroperforierungen ausgebildeten Ausnehmungen 6 durchdringen bei der dargestellten Ausführungsform die transparente Substratschicht vollständig. Vorzugsweise verjüngen sich die Ausnehmungen 6 bezüglich ihrer Ausdehnung 7 quer zu einer Durchdringungsrichtung 8. In der dargestellten vereinfachten Ausführungsform sind die Ausnehmungen 6 beispielsweise zylindrisch ausgeführt. Ein Verjüngen ist aus Gründen der Vereinfachung nicht dargestellt.

Die aus einem thermoplastischen transparenten Kunststoffmaterial, beispielsweise Polycarbonat, hergestellte Substratschicht 1 mit den Ausnehmungen 6 wird zwischen zwei weitere transparente Substratschichten 2, 3 in den Substratschichtenstapel 10 angeordnet, so dass diese die Ausnehmungen 6 an einer Oberseite 11 der transparenten Substratschicht 1 und an einer Unterseite 12 der transparenten Substratschicht 1 verschließen. Die Ausnehmungen 6 sind somit umlaufend von transparentem Kunststoffmaterial in dem Substratschichtenstapel 10 umgeben. An dieser Stelle wird angemerkt, dass Fig. 1 eine explosionsartige Zeichnung des Substratschichtenstapels 10 zeigt und die Substratschichten 1 bis 5 in dem Substratschichtenstapel 10 vor einem Laminierverfahrensschritt unmittelbar aneinander anliegen.

Die Oberseite 11 der Substratschicht 1 ist einer Oberseite 21 des Substratschichtenstapels 10 zugewandt und entsprechend ist die Unterseite 12 einer Unterseite 22 des Substratschichtenstapels 10 zugewandt. Die Substratschichten 2 und 3 sind ebenfalls aus einem transparenten thermoplastischen Kunststoffmaterial hergestellt. Besonders bevorzugt sind die Substratschichten 2 und 3, die unmittelbar an die mit den Ausnehmungen 6 versehene Substratschicht 1 angrenzen, aus demselben thermoplastischen Kunststoffmaterial oder auf Basis desselben Polymermaterials hergestellt, so dass sich in einem anschließenden Laminationsschritt ein Verbundkörper bilden lässt, der im fertigen Verbundkörper keine Phasenübergänge an den ursprünglichen Substratschichtgrenzen erkennen lässt.

Auf der von der Oberseite 21 des Substratschichtenstapels 10 abgewandten Seite der Ausnehmungen 6 ist unterhalb der Substratschicht 3 eine weitere laserfähig ausgebildete Substratschicht 4 angeordnet. Eine laserfähige Substratschicht umfasst Absorptionskörper, welche zwar eine Transparenz des Materials nicht oder nur unwesentlich einschränken, jedoch eine Absorption von Laserlicht zumindest eines Wellenlängenbereichs begünstigen, um eine permanente Markierung, beispielsweise über eine Schwärzung mittels einer Karbonisierung zu erleichtern. Bei der dargestellten Ausführungsform ist zur Unterseite 22 des Substratschichtenstapels 12 hin eine zusätzliche Substratschicht 5 vorgesehen, welche beispielsweise an ihrer Oberseite mit einer im Raster ausgebildeten grafischen Information 14 versehen ist. Diese kann beispielsweise aufgedruckt sein. Die grafische Information kann ineinander verschachtelte Raster, beispielsweise in Form von Streifen, welche sich senkrecht zur Zeichnungsrichtung erstrecken und verschachtelt alternieren, unterschiedliche grafische Informationsinhalte darstellen. Bei einer anderen Ausführungsform kann die grafische Information 14 auch nur als Punktraster ausgebildet sein, wobei einzelne Rasterstellen eine Markierung aufweisen können und andere keine Markierung und hierüber eine Information kodiert sein kann. Bei wieder anderen Ausführungsformen können sämtliche Rasterstellen mit einer einfarbigen Markierung versehen sein. Bei wieder anderen Ausführungsformen können die einzelnen unterschiedlichen Rasterstellen unterschiedliche Farbeindrücke bei einer Betrachtung hervorrufen. Die grafische Information kann auch über eine teilweise demetallisierte Metallschicht ausgebildet sein. Es versteht sich für den Fachmann, dass zum Ausbilden anderer Verbundkörper eine andere Anzahl von Substratschichten zu einem Substratschichtenstapel zusammengetragen werden kann. Ebenso versteht es sich, dass die einzelnen zusammengetragenen Substratschichten und/oder zwischen den einzelnen Substratschichten andere Sicherheitsmerkmale und Sicherheitselemente ausgebildet sein können. Beispielsweise können Mikrochips, Bedruckungen, Hologramme, metallisierte Patches oder Ähnliches beim Zusammentragen in den Substratschichtenstapel mitintegriert werden oder auf den Substratschichten ausgebildet sein.

Der Substratschichtenstapel wird nach der Fertigstellung einem Laminationsschritt unterzogen. Vorzugsweise wird der Laminationsschritt mittels eines Hochtemperatur-Hochdruck-Verfahrens ausgeführt, so dass die thermoplastischen Substratschichten miteinander verbunden werden. Hierbei werden die einzelnen Substratschichten nahe an die jeweilige Glastemperatur erhitzt, so dass sich die Substratschichten zu dem Verbundkörper verbinden. Darüber hinaus werden die Substratschichten bei diesem Vorgang verformbar, so dass sich an den Begrenzungsflächen 111, 112 der die Aussparungen 6 bildenden Einschüsse 106, die einer Oberseite 121 des Verbundkörpers 101 zu- oder abgewandt sind, ausbilden. Fig. 2 zeigt den Verbundkörper nach dem Laminieren. Je nach Schichtdicke der Substratschichten, Querschnittsformen und Durchmessern der Ausnehmungen, einer Anzahl der zusammengefügten Substratschichten etc. sind die Temperaturprofile an einer Oberseite des Substratschichtenstapels 21 und einer Unterseite des Substratschichtenstapels 22 sowie der aufgewendete Druck, der im zeitlichen Verlauf des Laminationsverfahrens variiert werden kann, so zu wählen, dass sich die Wölbungen an der Ober- und/oder Unterseite die Gaseinschlüsse ausbilden, die vorzugsweise bikonvex oder plankonvex sind. Die Oberseite 121 und die Unterseite 122 des gebildeten Verbundkörpers 101 bleiben jedoch auch in dem Bereich, in dem die Gaseinschlüsse 106 ausgebildet werden, eben und glatt.

Besonders bevorzugt sind alle Substratschichten, die zusammengefügt werden, auf Basis desselben Polymermaterials, beispielsweise Polycarbonat, hergestellt, so dass der Verbundkörper ein monolithischer Verbundkörper ist. Bei dem Verbundkörper kann es sich um ein Halbzeug zur Herstellung eines Wert- oder Sicherheitsdokuments handeln oder selbst um ein fertiges Wert- oder Sicherheitsdokument, beispielsweise eine Passseite, einen Personalausweis, einen Führerschein, ein Kreditkarte, eine Banknote, ein Visum oder Ähnliches.

In Fig. 3 ist schematische eine Schnittansicht eines Verbundkörpers mit einem Durchsichtfenster 150 dargestellt. Bei der dargestellten Ausführungsform ist eine unterste Materialschicht 105, welche aus der untersten Substratschicht 5 gebildet ist, im Volumen opak ausgebildet. In einem flächigen Bereich 151, der mit einem Bereich 152 korrespondiert, in dem die Gaseinschlüsse 106 ausgebildet sind, ist die unterste Materialschicht hingegen transparent ausgebildet. Beispielsweise kann die Substratschicht 5 bereits mit einem solchen transparenten Bereich hergestellt sein. Bei dieser Ausführungsform kann die Linsenwirkung des durch die Gaseinschlüsse gebildeten Linsenarrays in Durchsicht verwendet werden. Die Gaseinschlüsse 106 sind bei dieser Ausführungsform bikonvex ausgebildet.

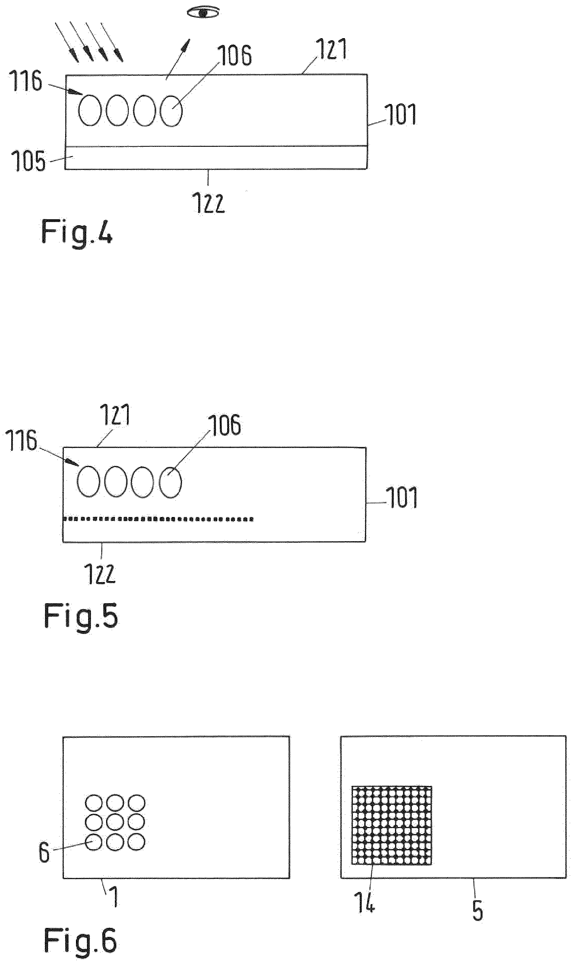

In Fig. 4 ist eine weitere Ausführungsform eines Verbundkörpers 101 im Querschnitt schematisch dargestellt. Bei dieser Ausführungsform ist die unterste Materialschicht 105 vollflächig opak ausgebildet. Bei dieser Ausführungsform kann das durch die Gaseinschlüsse 106 gebildete Linsenarray 116 bei einer Aufsicht mit Auflichtbetrachtung benutzt werden.

In Fig. 5 ist eine weitere Ausführungsform eines Verbundkörpers 101 im Querschnitt schematisch dargestellt, wobei angepasst an das Raster der durch die Gaseinschlüsse 106 gebildeten Linsenelemente des Mikrolinsenarrays 116 mehrere ineinander verschachtelte Informationsraster ausgebildet sind. Diese können beispielsweise durch ein Bedrucken einer Substratschichtoberfläche, welche an einer von der Oberseite 21 des Substratschichtenstapels abgewandten Seite der die Gaseinschlüsse 106 bildenden Ausnehmungen 6 angeordneten Substratschicht gebildet werden. Ebenso ist es möglich, eine opake Substratschicht in den Dokumentkörper zu integrieren, in den Mikroperforationen eingebracht werden, deren Durchmesser wesentlich kleiner als die der Ausnehmungen 6 sind, welche die Linsenelemente des Linsenarrays 116 bilden und als Informationsrasterelemente dienen. Die Gaseinschlüsse 106 sind bei dieser Ausführungsform erneut bikonvex ausgebildet.

In Fig. 6 sind schematisch in Draufsicht zwei Substratschichten gezeigt. Substratschicht 1 weist Ausnehmungen 6 in Form von Mikroperforationen auf, die exemplarisch in einem quadratischen gleichmäßigen Raster angeordnet sind. Eine Substratschicht 5 weist ein Druckraster auf, dessen Rasterperiode sehr viel kleiner als die der Ausnehmungen ist. Im fertigen Verbundkörper erhält man ein sich scheinbar bewegendes Raster beim Verkippen des Verbundkörpers und einer Betrachtung des Informationsrasters durch die Mikrolinsen hindurch.

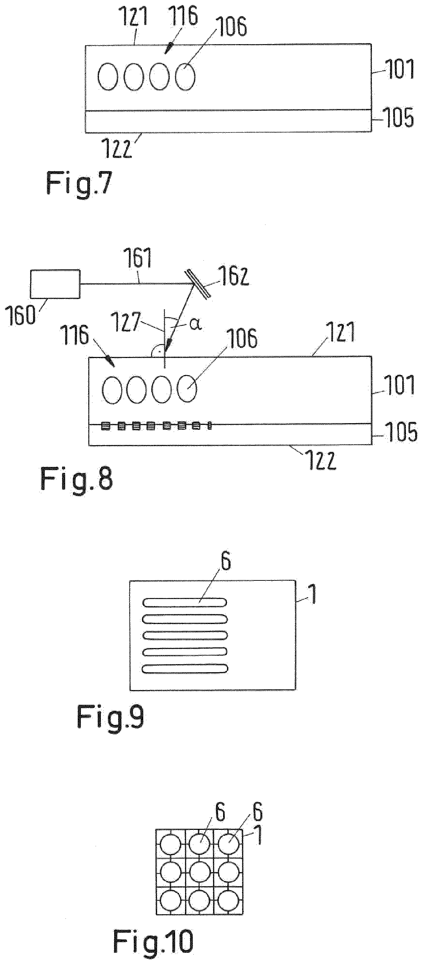

In Fig. 7 ist schematisch eine Schnittansicht eines Verbundkörpers gezeigt, bei dem die unterste Materialschicht als laserfähige Materialschicht ausgebildet ist. Bei anderen Ausführungsformen kann dies auch eine innenliegende Materialschicht sein, die jedoch eine auf der von der Oberseite 121 des Verbundkörpers abgewandten Seite der Gaseinschlüsse 106 angeordnete Materialschicht ist.

In Fig. 8 ist schematisch das Ausbilden eines CLI-Merkmals dargestellt. Mittels eines Lasers 160 wird Laserlicht 161 erzeugt. Beispielsweise über einen Spiegel 162 wird das Licht umgelenkt und unter einem Winkel α zur Oberflächennormale 127 des Verbundkörpers 101 eingestrahlt. Das Laserlicht 161 wird durch die Gaseinschlüsse, welche als fokussierende Linsen eines Linsenarray 116 wirken, auf oder in der laserfähigen Materialschicht 105 fokussiert und bildet dort eine Lasermarkierung, beispielsweise über ein Karbonisierung. Abhängig von dem Einstrahlwinkel α variiert die Position, an der diese Fokussierung stattfindet. Somit können unter unterschiedlichen Einstrahlrichtungen α unterschiedliche Informationsraster in der laserfähigen Materialschicht 105 ausgebildet werden. Abhängig von dem Betrachtungswinkel sind anschließend diese unterschiedlichen Informationen getrennt erfassbar.

In Fig. 9 ist eine schematische Draufsicht auf eine Substratschicht 1 mit Ausnehmungen 6 dargestellt, bei der die Ausnehmungen 6 schlitzartig ausgebildet sind. Quer zur Zeichnungsebene verjüngt sich der Querschnitt vorzugsweise.

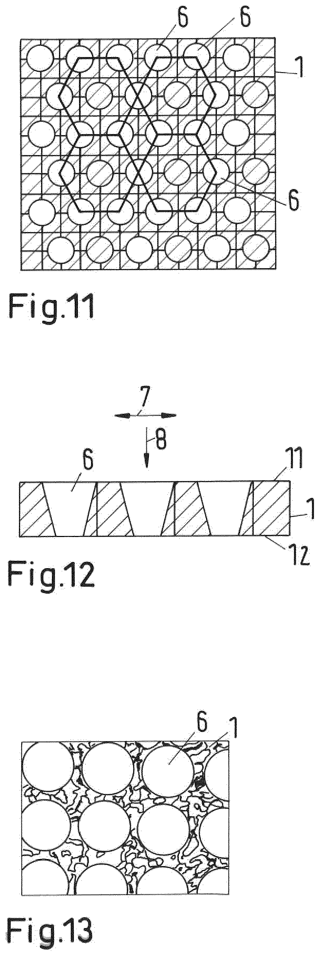

In Fig. 10 ist eine schematische Darstellung eines Ausschnitts einer Substratschicht 1 gezeigt, bei der die Ausnehmungen 6 als zylindrische Mikroperforierungen ausgebildet sind, die sich ebenfalls vorzugsweise in der Richtung senkrecht zur Zeichnungsebene in dem Material der Substratschicht 1 verjüngen oder aufweiten. Schematisch ist dies im Querschnitt in Fig. 12 dargestellt. An der Oberseite 11 der Substratschicht 1 ist die Ausdehnung 7 quer zur Durchdringungsrichtung 8 größer als an der Unterseite 12. Die Ausnehmungen 6 verjüngen sich konisch in Durchdringungsrichtung 8.

In Fig. 11 ist schematisch ein eine hexagonale Grundstruktur aufweisendes Raster von Ausnehmungen 6 gezeigt, welche vorzugsweise gleichartig hinsichtlich der Verjüngung ausgebildet sind, wie im Zusammenhang mit den Figuren 10 und 12 beschrieben ist.

In Fig. 13 ist eine Mikroskopaufnahme einer Substratschicht gezeigt, die mit solchen zylindrischen Ausnehmungen versehen ist. Diese sind bei dem dargestellten Ausführungsbeispiel in einem quadratischen Raster angeordnet.

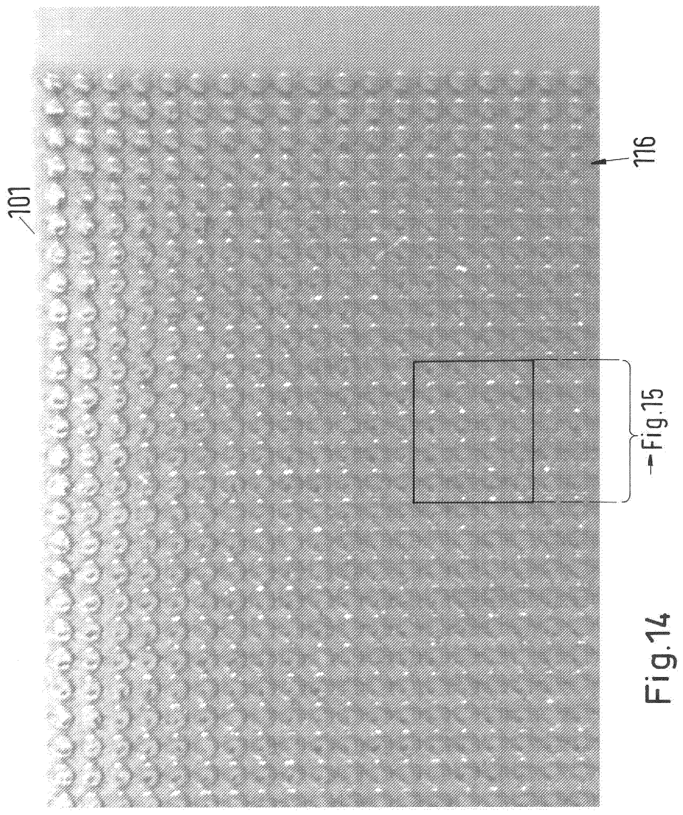

In Fig. 14 ist eine Mikroskopaufnahme von der Vorderseite eines transparent ausgebildeten Verbundkörpers dargestellt, bei dem im Inneren durch Gaseinschlüsse Mikrolinsen ausgebildet sind.

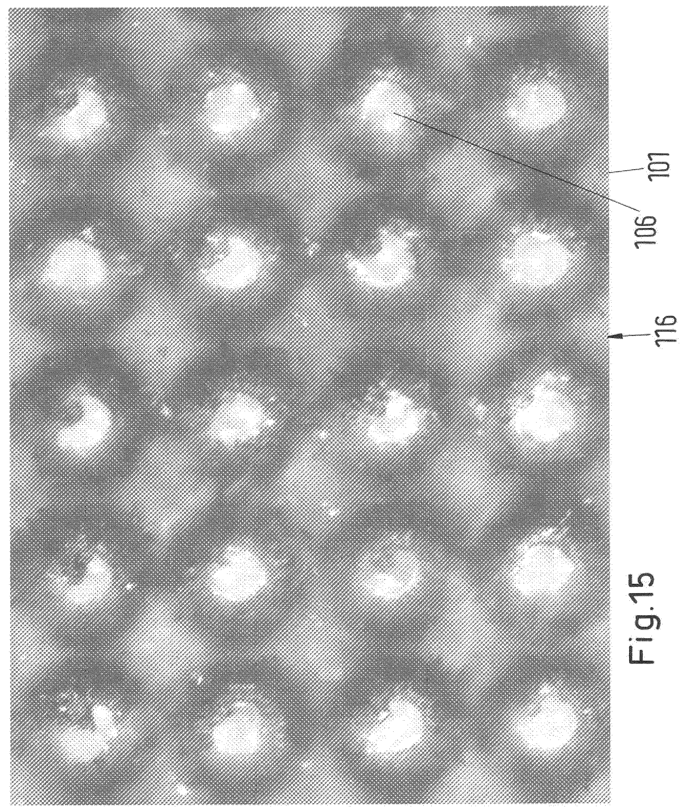

In Fig. 15 ist ein Ausschnitt der Draufsicht auf den Verbundkörper in Vergrößerung dargestellt. Die einzelnen Mikrolinsen, welche durch die Gaseinschlüsse 106 gebildet sind, sind gut zu erkennen. Im dargestellten Beispiel weisen die Gaseinschlüsse 106 einen Durchmesser in der Ebene der flächigen Erstreckung des Verbundkörpers, d.h. in einer Ebene parallel zur Zeichnungsebene, von etwa 200 µm auf.

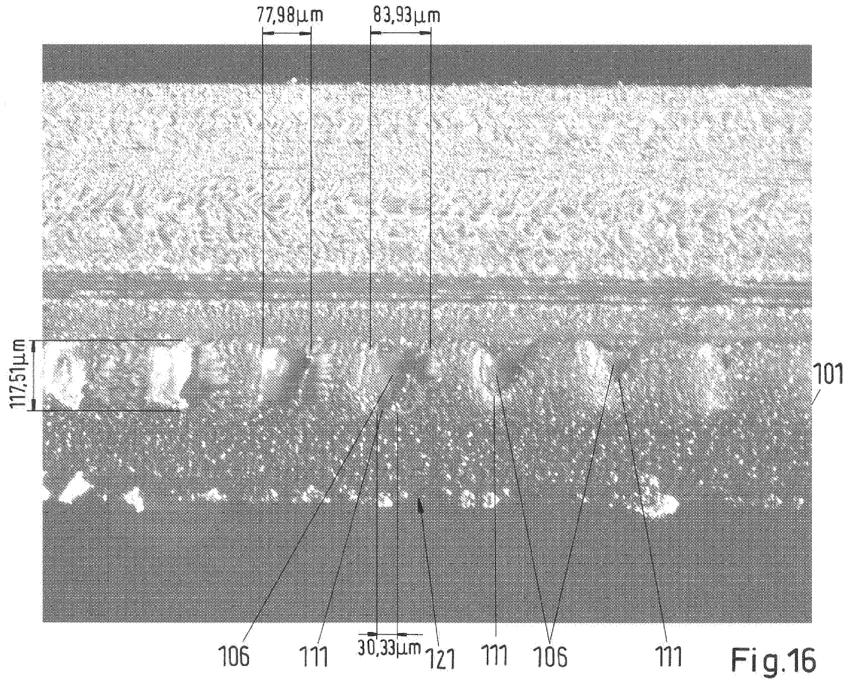

In Fig. 16 ist schließlich eine Mikroskopaufnahme eines Querschnitts durch einen transparenten Verbundkörper 101 dargestellt. Gut zu erkennen sind die aus unterschiedlich großen Ausnehmungen gebildeten Gaseinschlüsse 106 sowie die Wölbungen der der Oberseite 121 des Verbundkörper, welche sich in der Abbildung unten befindet, zugewandten Begrenzungsflächen 111.

Es versteht sich für den Fachmann, dass hier lediglich beispielhafte Ausführungsformen beschrieben und die einzelnen beschriebenen Merkmale in unterschiedlichen Kombinationen genutzt werden können, um die Erfindung auszuführen.

### Bezugszeichenliste

- 1: Substratschicht (in der die Ausnehmungen gebildet werden)
- 2, 3: transparente Substratschichten
- 4: weitere Substratschicht
- 5: unterste Substratschicht
- 6: Ausnehmung
- 7: Ausdehnung (quer zu 8)
- 8: Durchdringungsrichtung
- 10: Substratschichtenstapel
- 11: Oberseite der Substratschicht 1
- 12: Unterseite der Substratschicht 1
- 13: Oberseite der Substratschicht 5
- 14: grafische Information
- 21: Oberseite des Substratschichtenstapels
- 22: Unterseite des Substratschichtenstapels
- 101: Verbundkörper
- 105: untere Materialschicht
- 106: Gaseinschlüsse
- 111: obere Begrenzungsfläche
- 116: Linsenarray
- 112: untere Begrenzungsfläche
- 121: Oberseite des Verbundkörpers
- 122: Unterseite des Verbundkörpers
- 127: Oberflächennormale
- 150: Durchsichtfenster
- 151: Oberflächenbereich
- 152: Bereich
- 160: Laser
- 161: Laserlicht
- 162: Spiegel
- α: Einstrahlwinkel

## Patentansprüche

1. Verfahren zur Herstellung eines Verbundkörpers (101) für ein Sicherheits- und/oder Wertdokument umfassend die Schritte:
Bereitstellen einer transparenten, flächig ausgedehnten Substratschicht (1) aus einem thermoplastischen Kunststoffmaterial;
Einbringen einer Vielzahl von Ausnehmungen (6) in die transparente, flächig ausgedehnte Substratschicht (1);
Zusammentragen der mit den Ausnehmungen (6) versehenen Substratschicht (1) mit mindestens einer weiteren transparenten, thermoplastischen Substratschicht (2-5) zu einem Substratschichtenstapel (10), sodass die durch die Ausnehmungen (6) gebildeten Volumina mit einem Gas gefüllt sind und umlaufend von thermoplastischem Substratschichtmaterial umgeben sind;
Laminieren der Substratschichten (1-5) zu dem Verbundkörper (101) in einem Hochtemperatur-Hochdruck-Verfahren, sodass sich ein flächig ausgedehnter Verbundkörper (101) mit einer Oberseite (121) und einer Unterseite (122) ergibt und die gasgefüllten Volumina als Einschlüsse (106) in dem Verbundkörper (101) verbleiben, welche an einer der Oberseite (121) zugewandten Begrenzungsfläche (111) und/oder an einer der Oberseite (121) abgewandten Begrenzungsfläche (112) eine Wölbung aufweisen, **dadurch gekennzeichnet dass**, die Gaseinschlüsse während des Hochtemperatur-Hochdruck-Laminationsverfahren aus den mit einem Gas gefüllten, in Ausnehmungen (6) der einen Substratschicht gebildeten Volumina gebildet werden, die in dem Substratschichtenstapel umlaufend von thermoplastischem Substratschichtmaterial umgeben sind.

2. Verfahren nach Anspruch 1, **dadurch gekennzeichnet, dass** die Ausnehmungen (6) als Mikroperforationen in einem Raster ausgebildet werden.

3. Verfahren nach Anspruch 1 oder 2, **dadurch gekennzeichnet, dass** die Mikroperforationen sich von der einen Seite (11) zu einer gegenüberliegenden Seite (12) der mindestens einen transparenten Substratschicht (1) erstrecken und sich hinsichtlich ihres Durchmessers von der einen Seite (11) zu der gegenüberliegenden Seite (12) verjüngen und/oder aufweiten.

4. Verfahren nach Anspruch 2, **dadurch gekennzeichnet, dass** die Mikroperforationen einen elliptischen oder kreisförmigen Querschnitt quer zu einer Durchdringungsrichtung der flächig ausgedehnten, transparenten Substratschicht (1) aufweisen und sich entlang einer Durchdringungsrichtung (8) konisch verjüngen und/oder konisch aufweiten.

5. Verfahren nach einem der Ansprüche 2 bis 4, **dadurch gekennzeichnet, dass** die mindestens eine mit den Ausnehmungen (6) versehene transparente Substratschicht (1) in dem Substratschichtenstapel (10) zwischen zwei unmittelbar angrenzende transparente Substratschichten (2, 3) angeordnet wird, die aus einem Kunststoffmaterial bestehen, welches auf Basis desselben Polymermaterials hergestellt ist, wie der Kunststoff der einen mit den Ausnehmungen versehenen transparenten Substratschicht (1).

6. Verfahren nach einem der Ansprüche 1 bis 5, **dadurch gekennzeichnet, dass** auf oder in eine Substratschicht (5), welche in dem Substratschichtenstapel (10) auf einer von der Oberseite (21) abgewandten Seite der Ausnehmungen (6) angeordnet ist und/oder in eine Materialschicht, die auf einer von der Oberseite des Verbundkörpers abgewandten Seite der Einschlüsse (106) ausgebildet ist, mindestens zwei Informationsraster ausgebildet werden, die an eine Anordnung der Ausnehmungen (6) oder Einschlüsse (106) angepasst sind.

7. Verfahren nach einem der Ansprüche 1 bis 6, **dadurch gekennzeichnet, dass** in den Substratschichtenstapel (10) eine laserfähige Substratschicht (5) an der von der Oberseite (21) des Substratschichtenstapels (10) abgewandten Seite der Ausnehmungen (6) eingefügt wird und mindestens eines der Informationsraster mittels einer Lasermodifikation in der sich aus der laserfähigen Substratschicht (5) gebildeten Materialschicht gebildet wird.

8. Verfahren nach einem der vorangehenden Ansprüche, **dadurch gekennzeichnet, dass** die Gaseinschlüsse (106) plankonvex oder bikonvex ausgebildet werden.

9. Verbundkörper (101) für ein Sicherheits- und oder Wertdokument, der mittels eines Hochtemperatur-Hochdruck-Laminationsverfahrens aus einem Substratschichtenstapel gebildet ist, in dem eine Substratschichten, die aus einem thermoplastischen Kunststoffmaterial ist, mit mindestens einer weiteren Substratschicht zusammengetragen ist, die aus einem thermoplastischen Kunststoffmaterial ist, und wobei der Verbundkörper (101) eine Oberseite (121) und eine gegenüberliegende Unterseite (122) aufweist und der Verbundkörper (101) entlang der Oberseite (121) flächig ausgedehnt ist und im Inneren in einer transparenten Materialschicht eine Vielzahl von in einer Ebene, welche parallel zu der flächigen Ausdehnung der Oberseite (121) orientiert ist, angeordnete Gaseinschlüsse aufweist, welche an einer der Oberseite zugewandten Begrenzungsfläche (111) und/oder an einer der Oberseite abgewandten Begrenzungsfläche (112) eine Wölbung aufweisen, **dadurch gekennzeichnet dass**, die Gaseinschlüsse während des Hochtemperatur-Hochdruck-Laminationsverfahren aus mit einem Gas gefüllten, in Ausnehmungen (6) der einen Substratschicht gebildeten Volumina gebildet sind, die in dem Substratschichtenstapel umlaufend von thermoplastischem Substratschichtmaterial umgeben sind.

10. Verbundkörper (101) nach Anspruch 9, **dadurch gekennzeichnet, dass** die Einschlüsse in einem regelmäßigen Raster angeordnet sind.

11. Verbundkörper nach Anspruch 9 oder 10, **dadurch gekennzeichnet, dass** der Verbundkörper (101) zwischen der Oberseite (121) und der Unterseite (122) zumindest unter einem flächigen Bereich der Oberseite, unter dem zumindest ein Teil der Gaseinschlüsse (106) ausgebildet ist, aus im Volumen transparentem Material ausgebildet ist.

12. Verbundkörper (101) nach einem der Ansprüche 9 bis 11, **dadurch gekennzeichnet, dass** an oder in einer von der Oberseite (121) des Verbundkörpers (101) abgewandten Seite der Einschlüsse (106) ausgebildete Materialschicht mindestens zwei Informationsraster ausgebildet sind, die an ein Raster der Einschlüsse (106) angepasst sind, so dass zu jedem der mindestens zwei Informationsraster eine zugeordnete Betrachtungsrichtung relativ zu der Oberseite (121) des Verbundkörpers (101) existiert, unter der selektiv nur das zugeordnete der zwei Informationsraster durch die Oberseite (121) und die Einschlüsse (106) hindurch optisch erfassbar ist und das jeweils andere der mindestens zwei Informationsraster nicht optisch erfassbar ist.

13. Verbundkörper (101) nach einem der Ansprüche 9 bis 12, **dadurch gekennzeichnet, dass** die Gaseinschlüsse (106) plankonvex oder bikonvex sind.

## Claims

1. Method for producing a composite body (101) for a security and/or value document, comprising the steps:
- providing a transparent planar substrate layer (1) made of a thermoplastic plastic material;
- introducing a plurality of openings (6) into the transparent planar substrate layer (1);
- assembling the substrate layer (1) provided with the openings (6) with at least one other transparent thermoplastic substrate layer (2-5) into a substrate layer stack (10), such that the volumes formed by the openings (6) are filled with a gas and are continuously surrounded by thermoplastic substrate layer material;
- laminating the substrate layers (1-5) to the composite body (101) in a high-temperature, high-pressure method, such that a planar composite body (101) with an upper face (121) and a lower face (122) is produced, and the gas-filled volumes remain in the composite body (101) as inclusions (106), which have a curvature on a boundary surface (111) facing the upper face (121) and/or on a boundary surface (112) facing away from the upper face (121), **characterised in that**, during the high-temperature, high-pressure lamination method, the gas enclosures are formed from gas-filled volumes formed in openings (6) of the one substrate layer, which in the substrate layer stack are continuously surrounded by the thermoplastic substrate layer material.

2. Method according to claim 1, **characterised in that** the openings (6) are formed as microperforations in a grid.

3. Method according to claim 1 or 2, **characterised in that** the microperforations extend from the one side (11) to an opposite side (12) of the at least one transparent substrate layer (1), and narrow and/or widen with regard to their diameter from the one side (11) to the opposite side (12).

4. Method according to claim 2, **characterised in that** the microperforations exhibit an elliptical or circular cross-section transverse to a penetration direction of the planar transparent substrate layer (1), and narrow conically and/or widen conically along a penetration direction (8)

5. Method according to any one of claims 2 to 4, **characterised in that** the at least one transparent substrate layer (1) provided with the openings (6) is arranged in the substrate layer stack (10) between two immediately adjacent transparent substrate layers (2, 3), which consist of a plastic material, which is produced on the basis of the same polymer material as the plastic material of the transparent substrate layer (1) provided with the openings.

6. Method according to any one of claims 1 to 5, **characterised in that** at least two information grids are formed onto or into a substrate layer (5), which is arranged in the substrate layer stack (10) on a side of the openings (6) facing away from the upper face (21), and/or into a material layer which is formed on a side of the enclosures (106) facing away from the upper face of the composite body, these information grids being adjusted to an arrangement of the openings (6) or inclusions (106).

7. Method according to any one of claims 1 to 6, **characterised in that** a substrate layer (5) being laser markable is inserted into the substrate layer stack (10), on the side of the openings (6) facing away from the upper face (21) of the substrate layer stack (10), and that at least one of the information grids is formed by means of a laser modification in the material layer formed from the substrate layer (5) which can be subjected to a laser.

8. Method according to any one of the preceding claims, **characterised in that** the gas enclosures (106) are formed as plano-convex or biconvex.

9. Composite body (101) for a security and/or value document, which is formed by means of a high-temperature, high-pressure lamination method from a substrate layer stack, in which a substrate layer, which is formed from a thermoplastic plastic material, is merged with a further substrate layer, which is formed from a thermoplastic plastic material, and wherein the composite body (101) compromises an upper face (121) and an opposing lower face (122), and the composite body (101) is extended over its surface along the upper face (121), and in the interior, in a transparent material layer, comprises a plurality of gas enclosures, arranged in a plane which is oriented parallel to the surface extension of the upper face (121), which exhibit a curvature on a boundary surface (111) facing towards the upper face, and/or on a boundary surface (112) facing away from the upper surface, **characterised in that**, during the high-temperature, high-pressure lamination method, the gas enclosures are formed from gas-filled volumes formed in openings (6) of the one substrate layer, which in the substrate layer stack are continuously surrounded by the thermoplastic substrate layer material.

10. Composite body (101) according to claim 9, **characterised in that** the enclosures are formed in a regular grid.

11. Composite body according to claim 9 or 10, **characterised in that** the composite body (101) is formed between the upper face (121) and the lower face (122), at least beneath a planar region of the upper face, beneath which at least one part of the gas enclosures (106), is formed from material which is transparent in volume.

12. Composite body (101) according to any one of claims 9 to 11, **characterised in that**, at or in a material layer formed from the side of the enclosures (106) facing away from the upper face (121) of the composite body (101), at least two information grids are formed, which are adjusted to a grid of the enclosures (106), such that for each of the two informations grids an assigned direction of observation relative to the upper face (121) of the composite body (101) exists, under which, selectively, only the assigned information grid of the two information grids is optically detectable through the upper face (121) and the enclosures (106), and the other of the at least two information grids in each case is not optically detectable.

13. Composite body (101) according to any one of claims 9 to 12, **characterised in that** the gas enclosures (106) are plano-convex or biconvex.

## Revendications

1. Procédé de fabrication d'un corps composite (101) pour un document de sécurité et/ou de valeur comprenant les étapes de :
mise à disposition d'une couche de substrat transparente étalée à plat (1) en une matière plastique thermoplastique ;
introduction d'une pluralité d'évidements (6) dans la couche de substrat transparente étalée à plat (1) ;
regroupement de la couche de substrat (1) dotée des évidements (6) avec au moins une autre couche de substrat thermoplastique transparente (2-5) en une pile de couches de substrat (10), de sorte que les volumes formés par les évidements (6) soient remplis d'un gaz et soient entourés circonférentiellement de matière de couche de substrat thermoplastique ;
stratification des couches de substrat (1-5) en le corps composite (101) dans un procédé haute température-haute pression, de sorte à obtenir un corps composite étalé à plat (101) avec un côté supérieur (121) et un côté inférieur (122) et que les volumes remplis de gaz restent dans le corps composite (101) en tant qu'inclusions (106), lesquelles présentent un bombement au niveau d'une surface de limitation (111) tournée vers le côté supérieur (121) et/ou au niveau d'une surface de limitation (112) opposée au côté supérieur (121), **caractérisé en ce que**
les inclusions de gaz sont formées pendant le procédé de stratification haute température-haute pression à partir des volumes remplis d'un gaz, formés dans des évidements (6) de l'une couche de substrat, qui sont entourés circonférentiellement dans la pile de couches de substrat de matière de couche de substrat thermoplastique.

2. Procédé selon la revendication 1, **caractérisé en ce que** les évidements (6) sont réalisés en tant que microperforations dans une trame.

3. Procédé selon la revendication 1 ou 2, **caractérisé en ce que** les microperforations s'étendent de l'un côté (11) vers un côté opposé (12) de l'au moins une couche de substrat transparente (1) et se rétrécissent et/ou s'élargissent en ce qui concerne leur diamètre de l'un côté (11) vers le côté opposé (12).

4. Procédé selon la revendication 2, **caractérisé en ce que** les microperforations présentent une section transversale elliptique ou circulaire transversalement à une direction de pénétration de la couche de substrat transparente étalée à plat (1) et se rétrécissent coniquement et/ou s'élargissent coniquement le long d'une direction de pénétration (8).

5. Procédé selon l'une quelconque des revendications 2 à 4, **caractérisé en ce que** l'au moins une couche de substrat transparente (1) dotée des évidements (6) est agencée dans la pile de couches de substrat (10) entre deux couches de substrat transparentes directement adjacentes (2, 3), qui se composent d'une matière plastique, laquelle est fabriquée sur la base du même matériau polymère que le plastique de l'une couche de substrat transparente (1) dotée des évidements.

6. Procédé selon l'une quelconque des revendications 1 à 5, **caractérisé en ce que** sur ou dans une couche de substrat (5), laquelle est agencée dans la pile de couches de substrat (10) sur un côté des évidements (6) opposé au côté supérieur (21) et/ou dans une couche de matière, qui est réalisée sur un côté des inclusions (106) opposé au côté supérieur du corps composite, au moins deux trames d'information sont réalisées, qui sont adaptées à un agencement des évidements (6) ou inclusions (106).

7. Procédé selon l'une quelconque des revendications 1 à 6, **caractérisé en ce que** dans la pile de couches de substrat (10), une couche de substrat compatible au laser (5) est insérée au niveau du côté des évidements (6) opposé au côté supérieur (21) de la pile de couches de substrat (10) et au moins une des trames d'information est formée au moyen d'une modification laser dans la couche de matière formée à partir de la couche de substrat compatible au laser (5).

8. Procédé selon l'une quelconque des revendications précédentes, **caractérisé en ce que** les inclusions de gaz (106) sont réalisées de manière piano-convexe ou biconvexe.

9. Corps composite (101) pour un document de sécurité et ou de valeur, qui est formé au moyen d'un procédé de stratification haute température-haute pression en une pile de couches de substrat, dans laquelle une couche de substrat, qui est en une matière plastique thermoplastique, est regroupée avec au moins une autre couche de substrat, qui est en une matière plastique thermoplastique, et dans lequel le corps composite (101) présente un côté supérieur (121) et un côté inférieur (122) opposé et le corps composite (101) est étalé à plat le long du côté supérieur (121) et présente à l'intérieur dans une couche de matière transparente, une pluralité d'inclusions de gaz agencées dans un plan, lequel est orienté parallèlement à l'étalement plan du côté supérieur (121), lesquelles présentent un bombement au niveau d'une surface de limitation (111) tournée vers le côté supérieur et/ou au niveau d'une surface de limitation (112) opposée au côté supérieur, **caractérisé en ce que**
les inclusions de gaz sont formées pendant le procédé de stratification haute température-haute pression de volumes remplis d'un gaz, formés dans des évidements (6) de l'une couche de substrat, qui sont entourés circonférentiellement dans la pile de couches de substrat de matière de couche de substrat thermoplastique.

10. Corps composite (101) selon la revendication 9, **caractérisé en ce que** les inclusions sont agencées dans une trame régulière.

11. Corps composite selon la revendication 9 ou 10, **caractérisé en ce que** le corps composite (101) est réalisé en matière transparente dans le volume entre le côté supérieur (121) et le côté inférieur (122) au moins sous une zone plane du côté supérieur, sous laquelle au moins une partie des inclusions de gaz (106) est réalisée.

12. Corps composite (101) selon l'une quelconque des revendications 9 à 11, **caractérisé en ce qu'**au niveau ou dans une couche de matière réalisée du côté des inclusions (106) opposé au côté supérieur (121) du corps composite (101), au moins deux trames d'information sont réalisées, qui sont adaptées à une trame des inclusions (106), de sorte qu'il existe pour chacune des au moins deux trames d'information une direction d'observation associée par rapport au côté supérieur (121) du corps composite (101), dans laquelle de manière sélective seule la trame associée des deux trames d'information peut être détectée optiquement à travers le côté supérieur (121) et les inclusions (106) et la respectivement autre des au moins deux trames d'information n'est pas détectable optiquement.

13. Corps composite (101) selon l'une quelconque des revendications 9 à 12, **caractérisé en ce que** les inclusions de gaz (106) sont de manière piano-convexe ou biconvexe.
